# EUROPEAN PATENT SPECIFICATION

(11) **EP 0 364 168 B1**
(45) Date of publication and mention of the grant of the patent: **28.09.1994**
(21) Application number: 89310231.9
(22) Date of filing: 05.10.1989
(51) Int. Cl.: G01N 29/02

(54) **System and method for ultrasonic determination of density**
Vorrichtung und Verfahren zur Dichtebestimmung mit Ultraschall
Système et méthode pour la détermination ultrasonore de la densité

(30) Priority: 11.10.1988 US 255900
(43) Date of publication of application: 18.04.1990
(73) Proprietor: SIMMONDS PRECISION PRODUCTS INC., Wilmington Delaware 19894 (US)
(72) Inventor: Kline, Bruce Robert, Starksboro Vermont, 05487 (US)
(74) Representative: Foster, David Martyn

(56) References cited:
- WO-A-84/04167
- FR-A- 2 270 602
- US-A- 4 202 215
- PATENT ABSTRACTS OF JAPAN, vol. 10, no. 195 (P-475)[2251], 9th July 1986 ; & JP-A-61 38 559

## Description

The invention relates to a method of detecting the density of a liquid with which a reference material has an interface in the form of a first reflecting face, comprising the steps of transmitting an interrogation ultrasonic wave so that a part thereof passes through both the reference material and the liquid and another part thereof is reflected by the first reflecting face and passes through only one of the reference material and the liquid, whereby output waves respectively corresponding to the parts of the interrogation wave and having respective amplitudes are produced, and determining the density of the liquid from those amplitudes.

The invention also relates to a system for detecting the density of a liquid, comprising a reference material having a first reflecting face, transmitting means for transmitting an interrogation ultrasonic wave so that a part thereof passes through both the reference material and the liquid when the reference material and the liquid have an interface formed by the first reflecting face and another part thereof is reflected by the first reflecting face and passes through only one of the reference material and the liquid, whereby output waves respectively corresponding to the portions of the interrogation wave and having respective amplitudes are produced, and density determining means responsive to those amplitudes to determine the density of the liquid.

Such a method and system are shown in US-A-4 297 608. In this known method and system, a tubular probe has one end closed by an ultrasonic emitting and receiving transducer and the other end closed by a reflector. A block of the reference material is placed within the holder with a first one of its end faces in contact with the transducer but with its second or opposite end face stopping short of the reflector. When the probe is placed in the liquid, the liquid enters the probe between the second end face of the reference material and the reflector. Some of the emitted ultrasonic wave is reflected back to the transducer by the interface between the reference material and the liquid and thus travels only within the reference material. Some passes through this interface and through the liquid, before being reflected by the reflector back to the transducer. In addition, the reference material is formed with a reflective discontinuous surface intermediate its end faces which thus produces a further reflection of the emitted ultrasonic wave and which is independent of the liquid. The density of the liquid is determined from the reflected waves. This known method and system is complicated by the need to provide the reflective discontinuous surface and, moreover, by the need to place the reference material in a holder so that this discontinuous reflective surface is unaffected by the liquid. The invention aims to overcome these problems.

Accordingly, the known method is characterised in that the reference material has another interface with the liquid which is in the form of a second reflecting face, that the step of transmitting the interrogation ultrasonic wave comprises the step of transmitting the wave through the liquid so that a first portion of the interrogation wave is reflected once from the first reflecting face to form a first one of the output waves having a first said amplitude and constituting the said part of the interrogation wave which passes through only one of the reference material and the liquid, a second portion of the interrogation wave entering the reference material through the first reflecting face and travelling through the material to the second reflecting face and being reflected once by that face to form a second one of the output waves having a second one of the said amplitudes, and a third portion of the interrogation wave entering the reference material through the first reflecting face and travelling through the material and being reflected twice by the second reflecting face to form a third one of the output waves having a third one of the said amplitudes, and measuring the amplitudes of said first second and third reflected waves, and in that the step of determining the density of the liquid uses the first, second and third amplitudes.

Furthermore, in accordance with the invention the known system is characterised in that the reference material has a second reflecting face which forms a second interface between the reference material and the liquid, in that the transmitting means comprises means for transmitting the wave through the liquid so that a first portion of the interrogation wave is reflected once from the first reflecting face to form a first one of the output waves having a first said amplitude and constituting the said part of the interrogation wave which passes through only one of the reference material and the liquid, a second portion of the interrogation wave entering the reference material through the first reflecting face and travelling through the material to the second reflecting face and being reflected once by that face to form a second one of the output waves having a second one of the said amplitudes, and a third portion of the interrogation wave entering the reference material through the first reflecting face and travelling through the material and being reflected twice by the second reflecting face to form a third one of the output waves havinq a third one of the said amplitudes, and in that the transmitting means (14) also detects the first, second and third reflected waves and produces signals representative of the first second and third amplitudes, and in that the density determining means comprises means for determining the density of the liquid using the first, second and third amplitudes.

From FR-A-2 270 602 are known a method and system for determining the acoustic impedance of a material such as a geological formation, in which ultrasonic pulses are directed to the material through a plurality of elements which are in contact with each other and have known acoustic impedances. Such an arrangement is relatively complex because of its use of several reference elements.

Another known system and method is shown in JP-A-61-38559. In this known system and method, an ultrasonic transmitter is placed in one wall of a tank containing liquid whose density is to be measured and transmits an ultrasonic signal through the liquid to a reflector on the other side of the tank whence it is reflected back to the oscillator which can operate in a receiving mode. In this case no reference material is used, thus necessitating the knowledge and inclusion of other factors such as temperature in the evaluation process. The invention avoids this need.

Ultrasonic density measurement systems and methods according to the invention will now be described, by way of example only, with reference to the accompanying drawings in which:
Figure 1 is a schematic representation of one of the ultrasonic density measurement systems; and
Figure 2 is a schematic representation of the logical steps stored in memory and carried out in the microprocessor of the computer of the measurement system of Figure 1.

A method and system for determining the density of a liquid, such as a aircraft fuel, by measuring the amplitude of the reflections of an ultrasonic pulse from the faces of the walls of a reference material will be described. The densitometer system uses a transducer to transmit ultrasonic interrogation pulses through an evaluation material, such as a liquid fuel, to a reference material having a known density and well-defined boundaries, such as a glass, magnesium or aluminium block. The reference material has a pair of flat parallel sides the planes of which are about perpendicular to the line of travel of the pulses to the centre of each side.

The interrogation pulse is reflected from the flat sides of the reference material to provide first, second and third return pulses which can be used to determine the density of the evaluation material. The first return pulse is reflected from the outer face of the near side of the reference material, the second return pulse is reflected from the inner face of the far side of the reference material, and the third return pulse is the remnant of the second return pulse which is reflected from the inner near face of the rear side of the reference material and a second time from the inner face of the far side of the reference material. The density is determined as a function of the amplitudes of the return pulses.

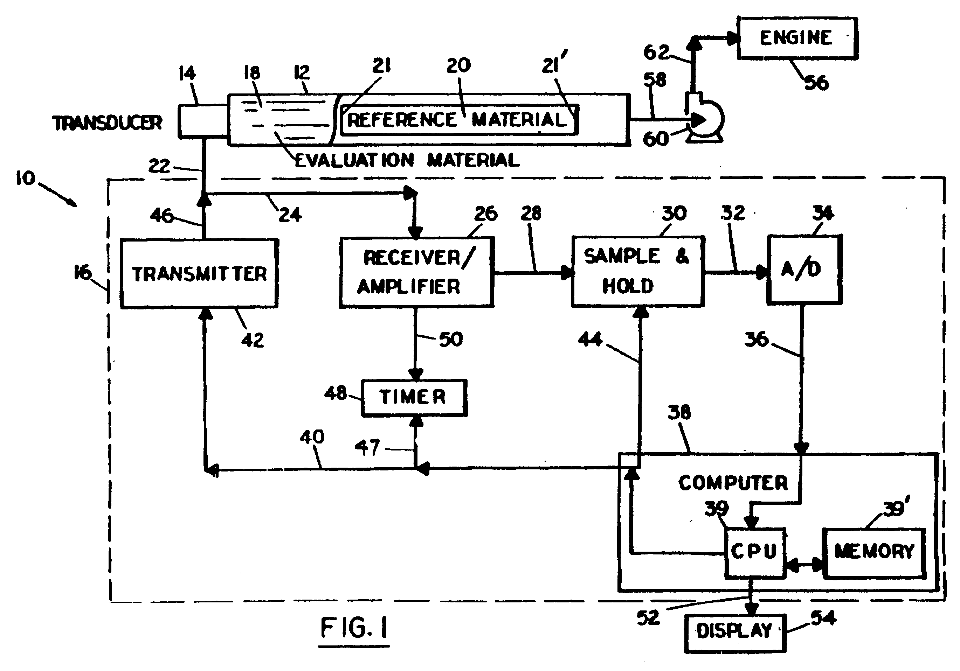

With more particular reference to Figure 1, the ultrasonic density measurement system 10 includes a container 12, ultrasonic transducer 14 and monitoring circuit 16. The transducer 14 is connected to the container 12 and to the monitoring circuit 16. The container 12 encloses evaluation material 18, such as liquid aircraft fuel, and reference material 20. The reference material 20 is preferably glass, aluminium or magnesium. Most preferably the reference material is glass. Transducer 14 is connected through electrical conductors 22 and 24 to receiver/amplifier 26. Receiver/amplifier 26 receives and amplifies signals from transducer 14 and sends amplified signals through electrical conductor 28 to sample and hold circuit 30 which is connected by electrical conductor 32 to analog to digital converter (A/D) 34. Converter 34 sends digital signals through electrical conductor 36 to computer 38. Computer 38 sends signals through electrical conductor 40 to transmitter 42, through electrical conductor 46 to timer 48 and through electrical conductor 44 to sample and hold circuit 30. The transmitter 42 is connected through electrical conductor 47 to transducer 14. The computer 38 is connected through electrical conductor 52 to display 54.

Computer 38 includes a central processing unit (CPU) 39 (which is preferably a microprocessor) which is connected to memory 39′. Evaluation material 18, such as liquid fuel, from container 12 is pumped to engine 56 through line 58 by pump 60, which is connected by line 62 by engine 56. Engine 56 may be a jet or turbine combustion engine.

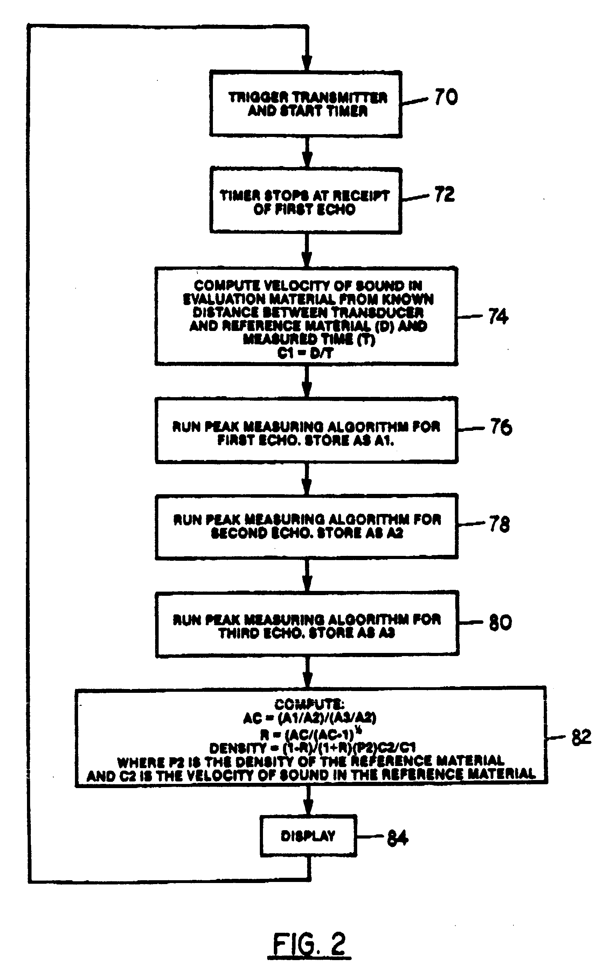

With more particular reference to Figure 2, a flowchart of the operations of the computer 38 is shown. The computer 38 triggers the transmitter 42 to signal the transducer 14 to transmit ultrasonic waves into the evaluation material 18.

The waves travel the distance from the transducer 14 through the evaluation material 18 to the reference material 20, and are partially reflected therefrom back to the transducer 14 in time period (T). The velocity of sound in evaluation material 18 is determined from the relationship that the velocity of sound (C1) in the evaluation material is equal to the distance travelled (D) divided by the time (T) required for an ultrasonic wave to travel the known distance (D) from the transducer 14 to face 21 of the reference material and back to transducer 14, (i.e. C1-D/T as noted in Figure 2).

Upon the arrival at transducer 14 of the wave (pulse or echo) reflected from the outer face of side 21 of the reference material 20 nearest to the transducer, the transducer 14 sends a signal to receiver/amplifier 26 which sends a signal to timer 48 through electrical conductor 50. The time for the ultrasonic pulse to travel from the transducer to the reference material 20 and for the first reflection (return pulse or echo) to travel back to the transducer 14 is stored by the computer 38 for use in determining the velocity of sound in the evaluation material 18. The amplitude of the first reflection from the evaluation material 18 is determined in central processing unit (CPU) 39 and stored in memory 39′ as A1. The wave reflected once from the inner face of the far side 21 of the reference material is the second reflection (return pulse or echo) and its amplitude is determined in the central processing unit (CPU) 39 and stored in memory 39′ as A2. The amplitude of the wave reflected twice from the inner face of the far side 21′ is the third reflection (return pulse or echo) and its amplitude is determined in the central processing unit (CPU) 39 and stored in memory 39′. The density of the evaluation material 18 is determined by the central processing unit 39 and displayed on display 54. The dimensions of the monitored portion of the evaluation material and reference material should be large enough so that the three echoes do not overlap or otherwise interfere with each other. For example, the known material may be 153mm (six inches) in length, in width and in depth. Preferably, the length, width and depth of the reference material are each from about 25 to 305 mm (one to twelve inches). Larger dimensions than these for the reference material, while operable, would represent undesirable added weight that the aircraft would be required to carry. Preferably, the monitored portion of the evaluation material has dimensions of length, width and depth which are at least as large as the range(s) preferred for the reference material 20. The "length" of the monitored portion of the evaluation material is the distance from the wall of the container at or adjacent to the transducer 14 to the face 21 which is the face of the reference material 20, which is closest to the transducer. Preferably, the height of the monitored portion of the evaluation material 18 in the container 12 is sufficient to cover the reference material 20. Thus, the reference material is preferably located in the lower portion of the container.

Density of the evaluation material 18 may be determined in central processing unit 39 using information and relationships stored in memory 39′ including Equation (1) as follows:$\text{P1 = [(1-R)/(1+R)](P2)C2/C1}$
wherein P1 is the density of the evaluation material 18, P2 is the density of the reference material 20, C1 is the velocity of sound in the evaluation material 18, C2 is the velocity of sound in the reference material 20 and R is the reflectivity (reflection coefficient) of the interfaces 21 and 21′ between the reference material 20 and the evaluation material 18.

Reference material 20 includes faces 21 and 21′ which are substantially equally polished (to reflect ultrasonic waves substantially equally). The planes of faces 21 and 21′ are substantially parallel to each other and substantially perpendicular to the line of travel of the pulses from transducer 14 to the centre of face 21 of reference material 20. The reflectivity of interfaces 21 and 21′ may be determined from Equation II as follows:${\text{R = (AC/(AC-1))}}^{\text{1/2}}$
wherein R is the reflectivity of the reference material 20 and AC may be determined from Equation III as follows:$\text{AC = (A1/A2)*(A3/A2)}$
wherein A1 is the amplitude (or peak) of the first reflection (first echo i.e. the wave reflected from the outer face of the near side 21 of the reference material 20 nearest to the transducer 14), A2 is the amplitude (or peak) of the second reflection (second echo i.e. the wave reflected once from the inner face of the far side 21′ of the reference material 20), and A3 is the amplitude (or peak) of the third reflection (third echo i.e. the wave reflected twice from the inner face of the far side 21′ of the reference material 20).

Equation II is obtained by solving for the reflectivity, R in Equations IV, V and VI:-${\text{A1 = AO R e}}^{\text{(-a1)(2d)}}$
wherein AO is the initial pulse amplitude, R is the reflectivity of the face 21, a1 is the attenuation coefficient of the evaluation material, 2d is the path length travelled by the first reflection which has an amplitude A1, and is reflected from face 21 of the reference material;${\text{A2 = AO(1+R) (-R) (1-R)e}}^{\text{(-a1)(2d)}} {\text{e}}^{\text{(-a2)(2a)}}$
wherein (1+R) is the transmissivity from the evaluation material to the reference material, (-R) is the reflectivity of the face 21′, (1-R) is the transmissivity from the reference material to the evaluation material, a2 is the attenuation coefficient of the reference material, and 2a is the path length in the reference material of the second reflection, which has an amplitude A2, and is reflected from face 21′; and${\text{A3 = AO(1+R) (-R)³ (1-R) e}}^{\text{(-a1)(2d)}} {\text{e}}^{\text{(-a2)(4a)}}$
wherein (-R)³ represents the three reflections in the reference material, and 4a is the path length in the reference material of the third reflection, which has an amplitude A3, and is reflected twice from face 21′.

The evaluation material is preferably liquid aircraft fuel. During operation of the engine 56, the fuel is pumped through fuel line 58 by pump 60, and through fuel line 62 into engine 56.

With more particular reference to Figure 2, the logical steps carried out by computer 39 are shown. The sequence of steps begins with box 70 which indicates triggering the transmitter to start the timer. The timer stops at receipt of the first echo as indicated in box 72. Then, as shown in box 74, the velocity of sound in the evaluation material is computed. The amplitude peaks are measured to obtain A1, A2 and A3 as indicated by boxes 76,78 and 80 respectively. The density of the evaluation material is then determined and displayed as indicated in boxes 82 and 84 respectively.

Thus, what has been described is a system and method for ultrasonic determination of density of liquid from the amplitude of reflections from the faces of a reference. While the invention has been described in connection with what is presently considered to be the most practical and preferred embodiments, it is to be understood that this embodiment is described hereby by way of example.

## Claims

1. A method of detecting the density of a liquid (18) with which a reference material (20) has an interface in the form of a first reflecting face (21), comprising the steps of transmitting an interrogation ultrasonic wave so that a part thereof passes through both the reference material (20) and the liquid (18) and another part thereof is reflected by the first reflecting face (21) and passes through only one of the reference material (21) and the liquid (18), whereby output waves respectively corresponding to the parts of the interrogation wave and having respective amplitudes are produced, and determining the density of the liquid (18) from those amplitudes, characterised in that the reference material (20) has another interface with the liquid (18) which is in the form of a second reflecting face (21′), that the step of transmitting the interrogation ultrasonic wave comprises the step of transmitting the wave through the liquid (18) so that a first portion of the interrogation wave is reflected once from the first reflecting face (21) to form a first one of the output waves having a first said amplitude and constituting the said part of the interrogation wave which passes through only one of the reference material (21) and the liquid (18), a second portion of the interrogation wave entering the reference material (20) through the first reflecting face (21) and travelling through the material (20) to the second reflecting face (21′) and being reflected once by that face (21′) to form a second one of the output waves having a second one of the said amplitudes, and a third portion of the interrogation wave entering the reference material (20) through the first reflecting face (21) and travelling through the material (20) and being reflected twice by the second reflecting face (21′) to form a third one of the output waves having a third one of the said amplitudes, and measuring the amplitudes of said first, second and third reflected waves, and in that the step of determining the density of the liquid (18) uses the first, second and third amplitudes.

2. A method according to claim 1, characterised in that the third portion of the interrogation wave is reflected once only by the first reflecting face (21) in travelling between its two reflections from the second face (21′).

3. A method according to claim 1 or 2, characterised in that the liquid comprises liquid fuel (18).

4. A method according to any preceding claim, characterised in that the reference material comprises aluminium.

5. A method according to any one of claims 1 to 3, characterised in that the reference material comprises glass (20).

6. A method according to any preceding claim, characterised in that each said face (21,21′) reflects ultrasonic waves substantially equally.

7. A method according to any preceding claim, characterised in that the density determination step is carried out by a computer (38) comprising a memory (39′) and a central processing unit (39).

8. A method according to claim 7, characterised in that the density determination step is carried out using the said amplitudes, and from data including the velocity of sound in the reference material (20).

9. A method according to claim 8, characterised in that the density of the liquid (18) is determined from data including the reflectivity of sound from the first and second faces (21,21′) of the reference material (20).

10. A method according to claim 9, characterised in that the data for the density, the velocity of sound and the reflectivity in the reference material (20) are stored in the memory (39′).

11. A system for detecting the density of a liquid (18), comprising a reference material (20) having a first reflecting face (21), transmitting means (14) for transmitting an interrogation ultrasonic wave so that a part thereof passes through both the reference material (20) and the liquid (18) when the reference material (20) and the liquid (18) have an interface formed by the first reflecting face (21) and another part thereof is reflected by the first reflecting face (21) and passes through only one of the reference material (21) and the liquid (18), whereby output waves respectively corresponding to the portions of the interrogation wave and having respective amplitudes are produced, and density determining means (38) responsive to those amplitudes to determine the density of the liquid (18), characterised in that the reference material (20) has a second reflecting face (21′) which forms a second interface between the reference material (20) and the liquid (18), in that the transmitting means (14) comprises means for transmitting the wave through the liquid (18) so that a first portion of the interrogation wave is reflected once from the first reflecting face (21) to form a first one of the output waves having a first said amplitude and constituting the said part of the interrogation wave which passes through only one of the reference material (21) and the liquid (18), a second portion of the interrogation wave entering the reference material (20) through the first reflecting face (21) and travelling through the material (20) to the second reflecting face (21′) and being reflected once by that face (21′) to form a second one of the output waves having a second one of the said amplitudes, and a third portion of the interrogation wave entering the reference material (20) through the first reflecting face (21) and travelling through the material (20) and being reflected twice by the second reflecting face (21′) to form a third one of the output waves having a third one of the said amplitudes, and in that the transmitting means (14) also detects the first, second and third reflected waves and produces signals representative of the first, second and third amplitudes, and in that the density determining means (38) comprises means for determining the density of the liquid (18) using the first, second and third amplitudes.

12. A system according to claim 11, characterised in that the third portion of the interrogation wave is reflected once only by the first reflecting face (21) in travelling between its two reflections from the second face (21′).

13. A system according to claim 11 or 12, characterised in that the liquid comprises liquid fuel (18).

14. A system according to any one of claims 11 to 13, characterised in that the reference material comprises aluminium.

15. A system according to any one of claims 11 to 13, characterised in that the reference material comprises glass (20).

16. A system according to any one of claims 11 to 15, characterised in that each said face (21,21′) reflects ultrasonic waves substantially equally.

17. A system according to any one of claims 11 to 16, characterised in that the density determination means comprises a computer (38) having a memory (39′) and a central processing unit (39).

18. A system according to claim 17, characterised in that the density determination means uses the said amplitudes, and data including the velocity of sound in the reference material (20).

19. A system according to claim 18, characterised in that the density of the liquid (18) is determined from data including the reflectivity of sound from the first and second faces (21,21′) of the reference material (20).

20. A system according to claim 19, characterised in that the data for the density, the velocity of sound and the reflectivity in the reference material (20) are stored in the memory (39′).

## Patentansprüche

1. Verfahren zum Ermitteln der Dichte einer Flüssigkeit (18), mit der ein Referenzmaterial (20) eine Grenzfläche in Form einer ersten reflektierenden Fläche (21) aufweist, mit den Schritten: Senden einer Abfrage-Ultraschallwelle derart, daß ein Teil der Welle sowohl das Referenzmaterial (20) als auch die Flüssigkeit (18) durchläuft und ein anderer Teil der Welle von der ersten reflektierenden Fläche (21) reflektiert wird und entweder nur durch das Referenzmaterial (21) oder nur die Flüssigkeit (18) läuft, wodurch Ausgangswellen erzeugt werden, die jeweils den Teilen der Abfragewelle entsprechen und jeweilige Amplituden aufweisen, und Bestimmen der Dichte der Flüssigkeit (18) aus diesen Amplituden,
dadurch gekennzeichnet,
daß das Referenzmaterial (20) eine weitere Grenzfläche mit der Flüssigkeit (18) in Form einer zweiten reflektierenden Fläche (21′) aufweist, daß der Schritt des Sendens der Abfrage-Ultraschallwelle einen Schritt aufweist, in dem die Welle derart durch die Flüssigkeit (18) gesendet wird, daß ein erster Teil der Abfragewelle einmal von der ersten reflektierenden Fläche (21) reflektiert wird, um eine erste Ausgangswelle mit einer ersten Amplitude zu bilden, und der den Teil der Abfragewelle bildet, entweder durch das Referenzmaterial (21) oder die Flüssigkeit (18) läuft, ein zweiter Teil der Abfragewelle durch die erste reflektierende Fläche (21) in das Referenzmaterial (20) eintritt und durch das Material (20) zur zweiten reflektierenden Fläche (21′) läuft und von dieser Fläche (21′) einmal reflektiert wird, um eine zweite Ausgangswelle mit einer zweiten Amplitude zu bilden, und ein dritter Teil der Abfragewelle durch die erste reflektierende Fläche (21) in das Referenzmaterial (20) eintritt und durch das Material (20) läuft und von der zweiten reflektierenden Fläche (21′) zweimal reflektiert wird, um eine dritte Ausgangswelle mit einer dritten Amplitude zu bilden, und
daß die Amplitude der ersten, zweiten und dritten reflektierten Welle gemessen wird, und
daß der Schritt des Ermittelns der Dichte der Flüssigkeit (18) die erste, zweite und dritte Amplitude verwendet.

2. Verfahren nach Anspruch 1, dadurch gekennzeichnet, daß der dritte Teil der Abfragewelle beim Durchlauf zwischen den beiden Reflexionen durch die zweite Fläche (21′) nur einmal von der ersten reflektierenden Fläche (21) reflektiert wird.

3. Verfahren nach Anspruch 1 oder 2, dadurch gekennzeichnet, daß die Flüssigkeit flüssigen Brennstoff (18) umfaßt.

4. Verfahren nach einem der vorhergehenden Ansprüche, dadurch gekennzeichnet, daß das Referenzmaterial Aluminium umfaßt.

5. Verfahren nach einem der Ansprüche 1 bis 3, dadurch gekennzeichnet, daß das Referenzmaterial Glas (20) umfaßt.

6. Verfahren nach einem der vorhergehenden Ansprüche, dadurch gekennzeichnet, daß jede Fläche (21, 21′) Ultraschallwellen im wesentlichen gleich reflektiert.

7. Verfahren nach einem der vorhergehenden Ansprüche, dadurch gekennzeichnet, daß der Schritt des Ermittelns der Dichte von einem Computer (38) mit einem Speicher (39′) und einer Zentralverarbeitungseinheit (39) durchgeführt wird.

8. Verfahren nach Anspruch 7, dadurch gekennzeichnet, daß der Schritt des Ermittelns der Dichte unter Verwendung der Amplituden und von Daten, zu denen die Schallgeschwindigkeit im Referenzmaterial (20) gehört, durchgeführt wird.

9. Verfahren nach Anspruch 8, dadurch gekennzeichnet, daß die Dichte der Flüssigkeit (18) aus Daten, zu denen das Schallreflexionsvermögen der ersten und der zweiten Fläche (21, 21′) des Referenzmaterials (20) gehört, ermittelt wird.

10. Verfahren nach Anspruch 9, dadurch gekennzeichnet, daß die Daten der Dichte, der Schallgeschwindigkeit und des Reflexionsvermögens des Referenzmaterials (20) im Speicher (39′) gespeichert werden.

11. System zum Ermitteln der Dichte einer Flüssigkeit (18), mit einem Referenzmaterial (20), das eine erste reflektierende Fläche (21) aufweist, einer Sendeeinrichtung (14) zum Senden einer Abfrage-Ultraschallwelle derart, daß ein Teil der Welle sowohl das Referenzmaterial (20) als auch die Flüssigkeit (18) durchläuft, wenn das Referenzmaterial (20) und die Flüssigkeit (18) eine durch die erste reflektierende Fläche (21) gebildete Grenzfläche aufweisen, und ein anderer Teil der Welle von der ersten reflektierenden Fläche (21) reflektiert wird und entweder nur durch das Referenzmaterial (21) oder nur durch die Flüssigkeit (18) läuft, wodurch Ausgangswellen erzeugt werden, die jeweils den Teilen der Abfragewelle entsprechen und jeweilige Amplituden aufweisen, und einer auf diese Amplituden reagierenden Dichteermittlungseinrichtung (38) zum Ermitteln der Dichte der Flüssigkeit (18) aus diesen Amplituden,
dadurch gekennzeichnet,
daß das Referenzmaterial (20) eine zweite reflektierende Fläche (21′) aufweist, die eine zweite Grenzfläche zwischen dem Referenzmaterial (20) und der Flüssigkeit (18) bildet,
daß die Sendeeinrichtung (14) eine Einrichtung aufweist, die die Welle derart durch die Flüssigkeit (18) sendet, daß ein erster Teil der Abfragewelle einmal von der ersten reflektierenden Fläche (21) reflektiert wird, um eine erste Ausgangswelle mit einer ersten Amplitude zu bilden, und der den Teil der Abfragewelle bildet, entweder durch das Referenzmaterial (21) oder die Flüssigkeit (18) läuft, ein zweiter Teil der Abfragewelle durch die erste reflektierende Fläche (21) in das Referenzmaterial (20) eintritt und durch das Material (20) zur zweiten reflektierenden Fläche (21′) läuft und von dieser Fläche (21′) einmal reflektiert wird, um eine zweite Ausgangswelle mit einer zweiten Amplitude zu bilden, und ein dritter Teil der Abfragewelle durch die erste reflektierende Fläche (21) in das Referenzmaterial (20) eintritt und durch das Material (20) läuft und von der zweiten reflektierenden Fläche (21′) zweimal reflektiert wird, um eine dritte Ausgangswelle mit einer dritten Amplitude zu bilden, und
daß die Sendeeinrichtung (14) ferner die erste, zweite und dritte reflektierte Welle erkennt und Signale erzeugt, die die erste, zweite und dritte Amplitude repräsentieren, und
daß die Dichteermittlungseinrichtung (38) eine Einrichtung zum Ermitteln der Dichte der Flüssigkeit (18) unter Verwendung der ersten, zweiten und dritten Amplitude aufweist.

12. System nach Anspruch 11, dadurch gekennzeichnet, daß der dritte Teil der Abfragewelle beim Durchlauf zwischen den beiden Reflexionen durch die zweite Fläche (21′) nur einmal von der ersten reflektierenden Fläche (21) reflektiert wird.

13. System nach Anspruch 11 oder 12, dadurch gekennzeichnet, daß die Flüssigkeit flüssigen Brennstoff (18) umfaßt.

14. Verfahren nach einem der Ansprüche 11-13, dadurch gekennzeichnet, daß das Referenzmaterial Aluminium umfaßt.

15. System nach einem der Ansprüche 11 bis 13, dadurch gekennzeichnet, daß das Referenzmaterial Glas (20) umfaßt.

16. System nach einem der Ansprüche 11 bis 15, dadurch gekennzeichnet, daß jede Fläche (21, 21′) Ultraschallwellen im wesentlichen gleich reflektiert.

17. System nach einem der Ansprüche 11 bis 17, dadurch gekennzeichnet, daß die Dichteermittlungseinrichtung einen Computer (38) mit einem Speicher (39′) und einer Zentralverarbeitungseinheit (39) aufweist.

18. System nach Anspruch 17, dadurch gekennzeichnet, daß die Dichteermittlungseinrichtung die Amplituden und Daten verwendet, zu denen die Schallgeschwindigkeit im Referenzmaterial (20) gehört.

19. System nach Anspruch 18, dadurch gekennzeichnet, daß die Dichte der Flüssigkeit (18) aus Daten, zu denen das Schallreflexionsvermögen der ersten und der zweiten Fläche (21, 21′) des Referenzmaterials (20) gehört, ermittelt wird.

20. System nach Anspruch 19, dadurch gekennzeichnet, daß die Daten der Dichte, der Schallgeschwindigkeit und des Reflexionsvermögens des Referenzmaterials (20) im Speicher (39′) gespeichert werden.

## Revendications

1. Procédé de détection de la densité d'un liquide (18) avec lequel une matière de référence (20) présente une interface sous la forme d'une première face réfléchissante (21), comportant les étapes d'émission d'une onde d'interrogation ultrasonore de telle sorte qu'une partie de celle-ci passe à travers à la fois la matière de référence (20) et le liquide (18) et une autre partie de celle-ci est réfléchie par la première face réfléchissante (21) et passe uniquement à travers la matière de référence (20) ou le liquide (18), des ondes de sortie correspondant de manière respective aux parties de l'onde d'interrogation et ayant des amplitudes respectives étant produites, et de détermination de la densité du liquide (18) à partir de ces amplitudes, caractérisé en ce que la matière de référence (20) présente une autre interface avec le liquide (18) qui est sous la forme d'une deuxième face réfléchissante (21′), en ce que l'étape d'émission de l'onde ultrasonore d'interrogation comprend l'étape d'émission de l'onde à travers le liquide (18) de sorte qu'une première partie de l'onde d'interrogation est réfléchie une fois par la première face réfléchissante (21) afin de former une première onde des ondes de sortie ayant une première amplitude et constituant ladite partie de l'onde d'interrogation qui passe uniquement à travers la matière de référence (20) ou le liquide (18), une deuxième partie de l'onde d'interrogation entrant dans la matière de référence (20) à travers la première face réfléchissante (21) et se déplaçant à travers la matière (20) jusqu'à la deuxième face réfléchissante (21′) et étant réfléchie une fois par cette face (21′) afin de former une deuxième onde des ondes de sortie ayant une deuxième amplitude, et une troisième partie de l'onde d'interrogation entrant dans la matière de référence (20) à travers la première face réfléchissante (21) et se déplaçant à travers la matière (20) et étant réfléchie deux fois par la deuxième face réfléchissante (21′) afin de former une troisième onde des ondes de sortie ayant une troisième amplitude, et de mesure des amplitudes desdites première, deuxième et troisième ondes réfléchies, et en ce que l'étape de détermination de la densité du liquide (18) utilise les première, deuxième et troisième amplitudes.

2. Procédé selon la revendication 1, caractérisé en ce que la troisième partie de l'onde d'interrogation est réfléchie une seule fois par la première face réfléchissante (21) en se déplaçant entre ses deux réflexions par la deuxième face (21′).

3. Procédé selon la revendication 1 ou 2, caractérisé en ce que le liquide comporte du combustible liquide (18).

4. Procédé selon l'une quelconque des revendications précédentes, caractérisé en ce que la matière de référence comprend de l'aluminium.

5. Procédé selon l'une quelconque des revendications 1 à 3, caractérisé en ce que la matière de référence comprend du verre (20).

6. Procédé selon l'une quelconque des revendications précédentes, caractérisé en ce que chacune desdites faces (21, 21′) réfléchit les ondes ultrasonores de manière sensiblement égale.

7. Procédé selon l'une quelconque des revendications précédentes, caractérisé en ce que l'étape de détermination de densité est réalisée par un ordinateur (38) comportant une mémoire (39′) et une unité centrale de traitement (39).

8. Procédé selon la revendication 7, caractérisé en ce que l'étape de détermination de densité est réalisée en utilisant lesdites amplitudes, et à partir de données comprenant la vitesse du son dans la matière de référence (20).

9. Procédé selon la revendication 8, caractérisé en ce que la densité du liquide (18) est déterminée à partir de données comprenant le pouvoir de réflexion du son par les première et deuxième faces (21, 21′) de la matière de référencé (20).

10. Procédé selon la revendication 9, caractérisé en ce que les données de la densité, de la vitesse du son et du pouvoir de réflexion dans la matière de référence (20) sont stockées dans la mémoire (39′).

11. Système de détection de la densité d'un liquide (18), comportant une matière de référence (20) ayant une première face réfléchissante (21), des moyens d'émission (14) destinés à émettre une onde d'interrogation ultrasonore de telle sorte qu'une partie de celle-ci passe à travers à la fois la matière de référence (20) et le liquide (18) lorsque la matière de référence (20) et le liquide (18) présentent une interface formée par la première face réfléchissante (21) et une autre partie de celle-ci est réfléchie par la première face réfléchissante (21) et passe uniquement à travers la matière de référence (20) ou le liquide (18), des ondes de sortie correspondant de manière respective aux parties de l'onde d'interrogation et ayant des amplitudes respectives étant produites, et des moyens de détermination de densité (38) qui répondent à ces amplitudes et destinés à déterminer la densité du liquide (18), caractérisé en ce que la matière de référence (20) présente une deuxième face réfléchissante (21′) qui forme une deuxième interface entre la matière de référence (20) et le liquide (18), en ce que les moyens d'émission (14) comportent des moyens destinés à émettre l'onde à travers le liquide (18) de sorte qu'une première partie de l'onde d'interrogation est réfléchie une fois par la première face réfléchissante (21) afin de former une première onde des ondes de sortie ayant une première amplitude et constituant ladite partie de l'onde d'interrogation qui passe uniquement à travers la matière de référence (20) ou le liquide (18), une deuxième partie de l'onde d'interrogation entrant dans la matière de référence (20) à travers la première face réfléchissante (21) et se déplaçant à travers la matière (20) jusqu'à la deuxième face réfléchissante (21′) et étant réfléchie une fois par cette face (21′) afin de former une deuxième onde des ondes de sortie ayant une deuxième amplitude, et une troisième partie de l'onde d'interrogation entrant dans la matière de référence (20) à travers la première face réfléchissante (21) et se déplaçant à travers la matière (20) et étant réfléchie deux fois par la deuxième face réfléchissante (21′) afin de former une troisième onde des ondes de sortie ayant une troisième amplitude, et en ce que les moyens d'émission (14) détectent également les première, deuxième et troisième ondes réfléchies et produisent des signaux représentatifs des première, deuxième et troisième amplitudes, et en ce que les moyens de détermination de densité (38) comportent des moyens destinés à déterminer la densité du liquide (18) en utilisant les première, deuxième et troisième amplitudes.

12. Système selon la revendication 11, caractérisé en ce que la troisième partie de l'onde d'interrogation est réfléchie une seule fois par la première face réfléchissante (21) en se déplaçant entre ses deux réflexions par la deuxième face (21′).

13. Système selon la revendication 11 ou 12, caractérisé en ce que le liquide comporte du combustible liquide (18).

14. Système selon l'une quelconque des revendications 11 à 13, caractérisé en ce que la matière de référence comprend de l'aluminium.

15. Système selon l'une quelconque des revendications 11 à 13, caractérisé en ce que la matière de référence comprend du verre (20).

16. Système selon l'une quelconque des revendications 11 à 15, caractérisé en ce que chaque face (21, 21′) réfléchit les ondes ultrasonores de manière sensiblement égale.

17. Système selon l'une quelconque des revendications 11 à 16, caractérisé en ce que les moyens de détermination de densité comportent un ordinateur (38) comportant une mémoire (39′) et une unité centrale de traitement (39).

18. Système selon la revendication 17, caractérisé en ce que les moyens de détermination de densité utilisent lesdites amplitudes, et des données comprenant la vitesse du son dans la matière de référence (20).

19. Système selon la revendication 18, caractérisé en ce que la densité du liquide (18) est déterminée à partir de données comprenant le pouvoir de réflexion du son par les première et deuxième faces (21, 21′) de la matière de référence (20).

20. Système selon la revendication 19, caractérisé en ce que les données de densité, de vitesse du son et de pouvoir de réflexion dans la matière de référence (20) sont stockées dans la mémoire (39′).
